# EUROPÄISCHE PATENTSCHRIFT

(11) **EP 1 148 963 B1**
(45) Veröffentlichungstag und Bekanntmachung des Hinweises auf die Patenterteilung: **09.04.2003**
(21) Anmeldenummer: 00908995.4
(22) Anmeldetag: 27.01.2000
(51) Int. Cl.: B23B 27/22, B23B 51/00

(54) **SPANABHEBENDES WERKZEUG**
CUTTING TOOL
OUTIL D'USINAGE

(30) Priorität: 28.01.1999 DE 29901414 U
(43) Veröffentlichungstag der Anmeldung: 31.10.2001
(73) Patentinhaber: HARTMETALLWERKZEUGFABRIK ANDREAS MAIER GMBH, 88477 Schwendi (DE)
(72) Erfinder: SEIDEL, Peter, D-87647 Unterthingau (DE); LICHTENSTEIGER, Alfons, D-88477 Schwendi-Hörenhausen (DE); FRODL, Wolfgang, D-87509 Immenstadt (DE); NEUMÜLLER, Anton, D-87561 Oberstdorf (DE); EBERLE, Günter, D-88477 Schwendi-Hörenhausen (DE)
(74) Vertreter: König, Beate, Dipl.-Phys. Dr.
(86) Internationale Anmeldenummer: DE0000358
(87) Internationale Veröffentlichungsnummer: WO00044518

(56) Entgegenhaltungen:
- WO-A-98/51436
- CH-A- 257 171
- CH-A- 307 714
- DE-C- 352 816
- FR-A- 2 611 547
- GB-A- 527 608
- US-A- 2 237 901
- US-A- 3 124 864
- US-A- 3 268 978
- US-A- 3 673 653

## Beschreibung

Die Erfindung betrifft ein spanabhebendes Werkzeug zum Bohren, Reiben, Senken, Fräsen, Sägen und Drehen mit mindestens einer Schneide und mit wenigstens einem Spanbrecher an der Schneide.

Beim spanabhebenden Bearbeiten ergeben sich vor allem bei langspanenden Werkstoffen wie z.B. Aluminium, Kupfer, Kunststoffe usw. Probleme mit der Spanabfuhr. Bei diesen Materialien können Späne unkontrollierbare Längen erreichen, sich verhaken, den Spanfluß erschweren und auch Verletzungsgefahren mit sich bringen.

Spanbrecher sind an sich an spanabhebenden Werkzeugen wie Fräsund Drehwerkzeugen bekannt. Ferner ist es bekannt, an den Schneiden von Bohr-Senk- und Reibwerkzeugen Spanbrecher einzuarbeiten, um die Bildung kurzer, handhabbarer Späne zu erreichen.

Bei den üblichen Schneidstoffen wie HSS und Hartmetall ist das Anbringen von Spanbrechern und Spanleitstufen technisch problemlos möglich. Aus der CH-A-307 714 ist beispielsweise ein spanabhebendes Werkzeug mit einer Schneide aus Hartmetall und einer auf diese aufgelegten Deckplatte aus Schnelldrehstahl bekannt, die beide, Schneide- und Deckplatte, aufgelötet sind. Die Deckplatte ist gegenüber der Schneide etwas zurückgesetzt und bildet mit ihrer Stirnfläche einen Spanbrecher.

Bei ultraharten Schneidstoffen wie z.B. polykristallinem Diamant (PKD) und kubischem Bornitrid (CBN) ist es jedoch schwierig, Spanleitstufen und Spanbrecher wirtschaftlich in hochwertiger Qualität anzubringen.

Die der Erfindung zugrundeliegende Aufgabe besteht nun darin, eine Möglichkeit zu schaffen, Spanleitstufen oder Spanbrecher an den Werkzeugschneiden aus schwierig bearbeitbaren Schneidstoffen wie z.B. PKD wirtschaftlich so anzubringen, daß eine für den jeweils zu bearbeitenden Werkstoff günstige Spanform entsteht.

Diese Aufgabe ist bei einem spanabhebenden Werkzeug mit den Merkmalen des Anspruchs 1. Vorteilhafte Ausführungen des erfindungsgemäßen Werkzeugs sind Gegenstand der abhängigen Ansprüche.

Ein erfindungsgemäßes spanabhebendes Werkzeug umfaßt somit mindestens eine Schneide und wenigstens einen Spanbrecher an der Schneide. Auf dem Werkzeuggrundkörper ist eine Verbundplatte aus Spanbrecherteil und Schneidenteil befestigt, wobei die Verbundplatte als Sandwichplatte ausgebildet ist und einen Schneidenteil mit Auflage (Träger) umfaßt. Der Schneidenteil ist aus einem Schneidstoff aus PKD oder CBN. Der Spanbrecherteil ist auf den Schneidenteil und der Schneidenteil auf die Auflage aufgesintert.

Das erfindungsgemäße Werkzeug zeichnet sich dadurch aus, daß die Spanleitstufe nicht wie üblich unmittelbar in den harten Schneidstoff eingearbeitet ist, sondern in ein separates Spanbrecherteil, das mit dem Schneidenteil fest verbunden ist.

Ein Vorteil des erfindungsgemäßen Werkzeugs ist eine geringe Teilezahl und dadurch hohe Integration des Werkzeugs, wodurch die Zahl der Herstellungsschritte gering und die mechanische Festigkeit und Sicherheit hoch sind.

Vorteilhaft ist bei den erfindungsgemäßen Werkzeugen das Verlegen der Spanbrecher- bzw. Spanleitstufenfunktion in einen Bereich, in dem sich die erforderliche Spanbrecher- bzw. Spanleitstufengeometrie wirtschaftlich anbringen läßt. Der Spanfluß läßt sich hierbei durch entsprechende Ausführung der Spanleitstufen leicht den jeweiligen Erfordernissen des Werkstoffes anpassen. Dies trifft auch an schwierig zu bearbeitenden Stellen der Werkzeugschneide zu, da die Verbundplatte schon vor dem Befestigen auf dem Werkzeuggrundkörper oder der Werkzeuggrundkörper selbst zuvor mit den Spanleitstufen versehen werden kann.

Zur weiteren Erläuterung des Erfindungsgegenstandes wird auf die Zeichnung Bezug genommen, die Ausführungsformen der Erfindung beispielsweise wiedergibt. Es zeigen:
- Fig. 1: eine Teilansicht eines Stufenwerkzeuges mit Bohrspitze, jeweils mit Spanbrecher,
- Fig. 2: eine Seitenansicht eines Spanbrecher-Schneidenbereiches mit Übergangsradius zur daran anschließenden schrägen Spanbrecherfläche,
- Fig. 3: eine Seitenansicht eines Spanbrecher-Schneidenbereiches mit radiusförmiger Spanbrecherfläche,
- Fig. 4: eine Seitenansicht eines Spanbrecher-Schneidenbereiches mit gerader, unter einem Winkel verlaufender Spanbrecherfläche,
- Fig. 5: eine Seitenansicht eines Spanbrecher-Schneidenbereiches mit einem Spanbrecherteil, welches das Scheidenteil überlappt,
- Fig. 6: eine Seitenansicht eines Spanbrecher-Schneidenbereiches mit mehreren aneinanderliegenden konkaven Spanbrecherflächen,
- Fig. 7: eine Seitenansicht eines Spanbrecher-Schneidenbereiches mit mehreren aneinanderliegenden, konvexen Spanbrecherflächen,
- Fig. 8 und 9: Seitenansichten eines Spanbrecher-Schneidenbereiches mit treppenförmigen Spanbrecherflächen,
- Fig. 10: eine Seitenansicht eines Spanbrecherschneidenbereichs ähnlich Fig. 2, mit auf dem Werkzeuggrundkörper befestigtem Spanbrecherteil und auf diesem befestigtem Schneidenteil,
- Fig. 11: eine Seitenansicht eines Spanbrecher-Schneidenbereichs ähnlich Fig. 3, mit in einem Schlitz des Werkzeuggrundkörpers aufgenommenem Schneidenteil,
- Fig. 12: eine Seitenansicht eines Spanbrecherschneidenbereichs ähnlich Fig. 3. , mit am Werkzeuggrundkörper befestigtem Schneidenteil,
- Fig. 13 bis 15: Teilansichten eines Spanbrecher-Schneidenbereiches mit parallel zur Schneide bzw. unter einem Winkel zur Schneide verlaufenden Spanbrecherflächen,
- Fig. 16 bis 18: Teilansichten eines Spanbrecher-Schneidenbereiches mit bogenförmig verlaufenden Spanbrecherflächen,
- Fig. 19: eine Teilansicht eines Spanbrecher-Schneidenbereiches mit trapezförmigen Spanbrecherflächen,
- Fig. 20: eine Teilansicht eines Spanbrecher-Schneidenbereiches mit einem taschenförmig ausgearbeiteten Spanbrecher,
- Fig. 21: eine Teilansicht eines Spanbrecher-Schneidenbereiches mit Spanleitrillen, welche durch das Spanbrecherteil und die anschließende weiterführende Spannut führen, und
- Fig. 22: eine Teilansicht eines Spanbrecher-Schneidenbereiches mit Spanleitrillen, welche kürzer als das Spanbrecherteil ausgeführt sind.

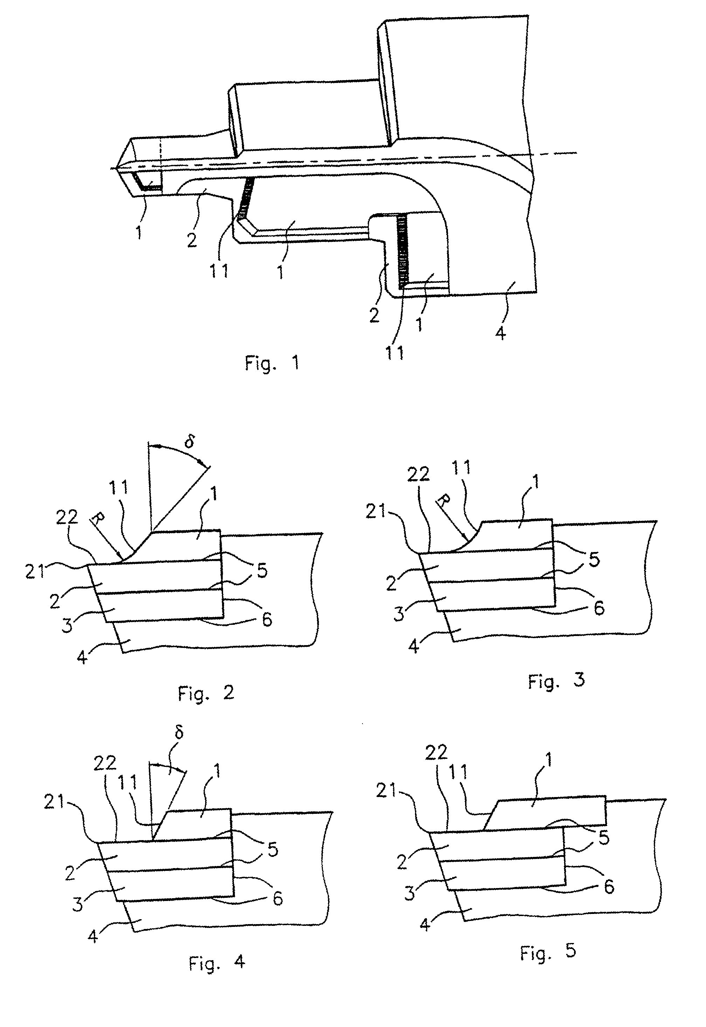

Das in Fig. 1 gezeigte Stufenwerkzeug mit Spanbrecher zeigt eine mögliche Ausgestaltung der Spanleitstufe 11 an einem Werkzeug aus Hartmetall mit polykristalliner Diamantschneide 2. Dieser wirtschaftlich herstellbare Spanbrecher 11 wird vor dem Befestigen der aus Spanbrecherteil 1, Schneidenteil 2 und Auflage 3 aus Hartmetall bestehenden Schneideneinheit auf dem Grundkörper 4, in die Spanbrecherplatte 1 eingearbeitet. Dabei ist es nicht erforderlich, Material aus dem ultraharten Schneidstoff zu entfernen.

Der Spanbrecher 11 bzw. die Spanleitstufe werden in das darüberliegende leichter bearbeitbare Material 1 eingearbeitet.

Fig. 2 zeigt den Schneidenbereich mit Schneidkörper 2, dem Spanbrecherteil 1 und der Auflage 3, die gemeinsam (mit dem eingearbeiteten Spanbrecher 11), also als Sandwich-Platte, im Werkzeuggrundkörper 4 befestigt werden.

Die Verbindung zwischen den einzelnen Komponenten Spanbrecherplatte 1, Schneidenteil 2 und Auflage 3 zu einer Verbundplatte erfolgt durch Sintern an den Flächen 5.

Die aus Spanbrecherteil 1, Schneidenteil 2 und Auflage 3 bestehende Verbundplatte bzw. Schneideneinheit mit dem fertig bearbeiteten Spanbrecher 11 bzw. Spanleitstufe wird auf dem Werkzeuggrundkörper 4 vorzugsweise durch Löten, Kleben an den Flächen 6 oder durch Schrauben befestigt.

Zur geeineten Stauchung und Formung des Spanes wird die Spanbrecherfläche 11 von der Spanfläche 22 aus durch einen Radius R mit daran anschließenden Winkel δ gebildet (Fig. 2).

Je nach den Erfordernissen, die durch den Zerspannungsvorgang gestellt werden, kann dieser Winkel δ im Bereich von 0° bis 30°, vorzugsweise 10° bis 20° liegen.

Bei einer weiteren Ausführung, die in Fig. 3 dargestellt ist, wird die Spanbrecherfläche 11 durch einen Radius R gebildet.

Weitere vorteilhafte Ausführungen des Spanbrechers sind in Fig. 4 bis 9 dargestellt. Hier werden die Spanbrecherflächen 1 durch konkave, konvexe oder treppenförmige Ausführung des Spanbrechers gebildet.

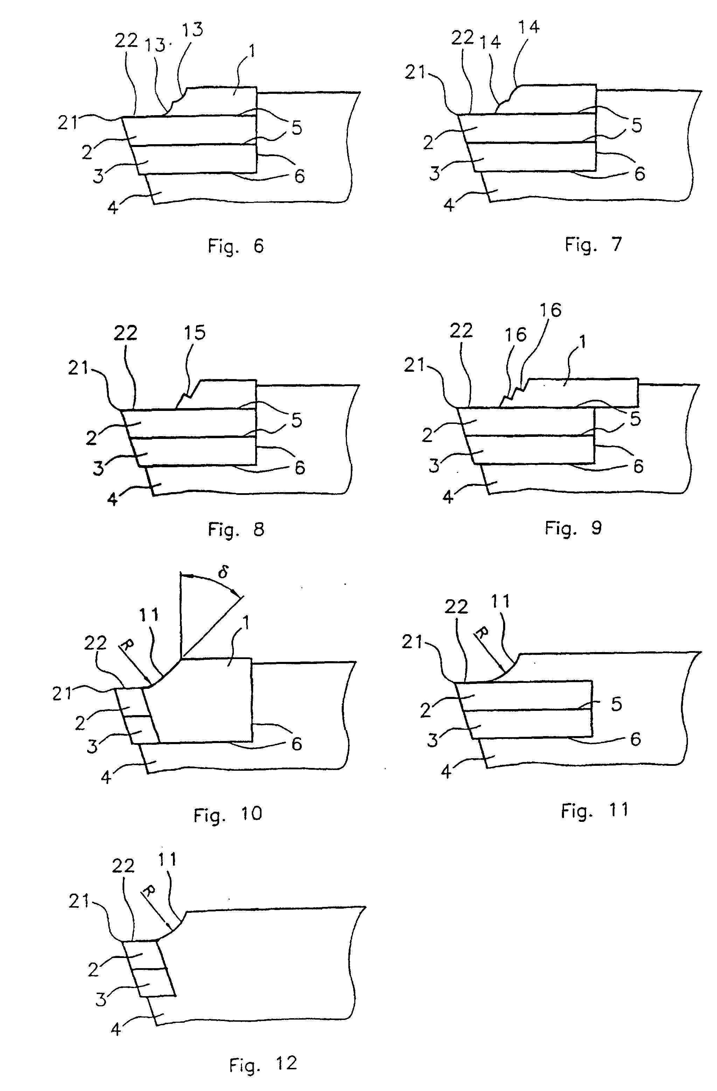

Bei der Anordnung gemäß Fig. 10 ist der Spanbrecherteil 1 auf dem Werkzeuggrundkörper 4 befestigt. Der Schneidenteil 2 mit der Auflage 3 ist auf dem Spanbrecherteil 1 befestigt.

Bei dem in Fig. 11 gezeigten Ausführungsbeispiel ist das Hartmetallmaterial des Werkzeuggrundkörpers 4 im Schneidenbereich zu einem Spanbrecherteil geschliffen worden. In den Werkzeuggrundkörper ist ein Schlitz eingeschliffen oder erodiert worden, in dem der Schneidenteil 2 mit Träger (B) eingelötet sind.

Der in Fig. 12 dargestellte Werkzeuggrundkörper 4 ist wiederum als Spanbrecher ausgebildet. An ihm ist der Schneidenteil 2, 3 befestigt.

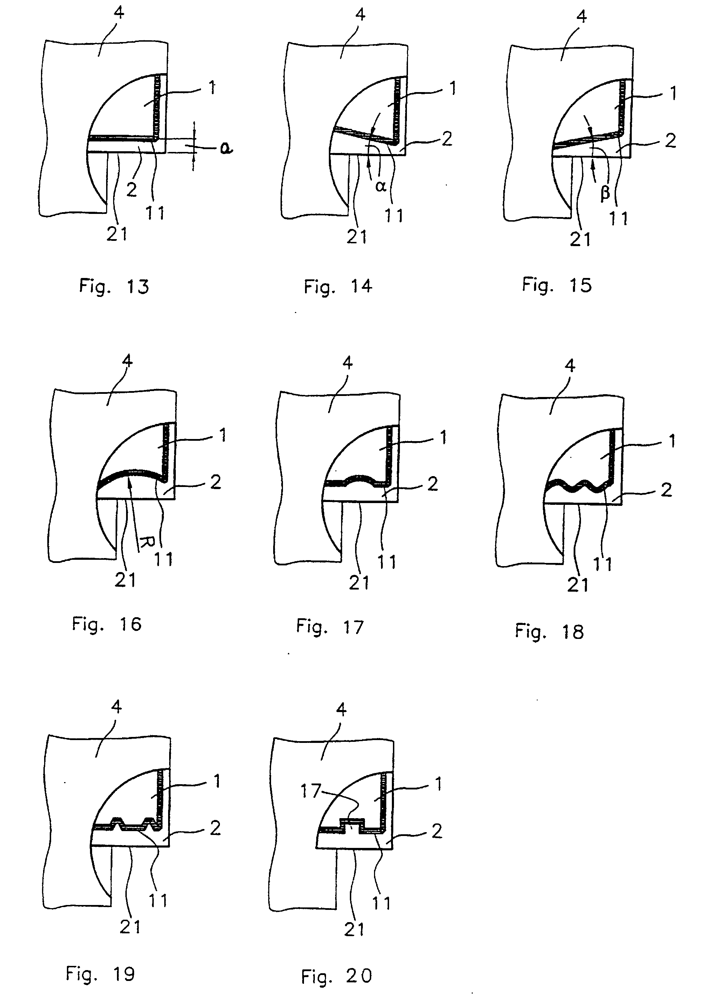

Weitere mögliche vorteilhafte Ausführung des Spanbrechers in Schneidenrichtung sind in Fig. 13 bis 19 dargestellt.

Bei dem in Fig. 13 dargestellten Spanbrecher 11 verläuft dieser parallel zur Schneide in einem Abstand a von vorzugsweise 0,5 mm bis 1,2 mm.

Die in Fig. 14 und Fig. 15 gezeigten Ausführungen lassen Richtungsbeeinflussung das Spanablaufs durch Größe und Richtung der Winkel α und β, zwischen Spanbrecher 11 und Schneide 21 zu.

Weitere in Fig. 13 bis 16 gezeigten Ausführungsformen des Spanbrechers 11 ermöglichen zusätzlich eine Einflußnahme auf die Form der Späne.

Mit diesen bogenförmig und trapezförmigen gestalteten Spanbrechern lassen sich Spanbildung und Spanfluß für den Bearbeitungsfall weiter optimieren.

In Fig. 20 ist eine taschenförmige Ausdehnung 17 des Spanbrecherteils 1 dargestellt.

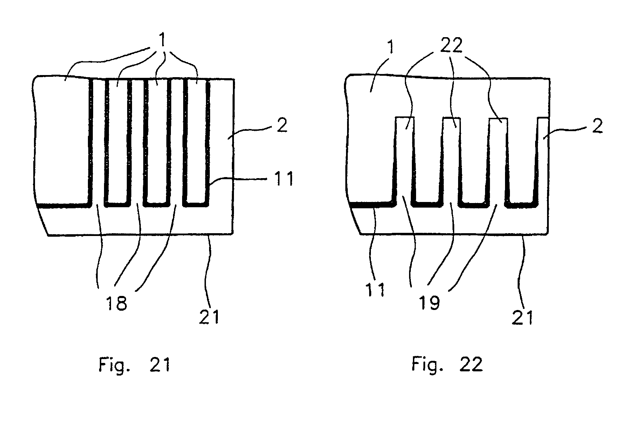

Bei der in Fig. 21 dargestellten Ausführung sind Leitrillen 18 mit flachem Trapezquerschnitt in die Spanbrecherplatte 1 eingeformt. Diese Leitrillen sind durchgängig in die Spanbrecherplatte 1 und die daran anschließende Spannut eingearbeitet.

Die in Fig. 22 gezeigte Ausführung hat die Leitrillen 19 nur in der Spanbrecherplatte 1.

## Patentansprüche

1. Spanabhebendes Werkzeug zum Bohren, Reiben, Senken, Fräsen, Sägen und Drehen mit mindestens einer Schneide und mit wenigstens einem Spanbrecher an der Schneide,
**dadurch gekennzeichnet, daß**
auf dem Werkzeuggrundkörper (4) eine als Sandwichplatte ausgebildete Verbundplatte aus Spanbrecherteil (1) und Schneidenteil (2) mit Auflage (3) befestigt ist,
der Schneidenteil (2) aus einem Schneidstoff aus PKD oder CBN ist und
der Spanbrecherteil (1) auf den Schneidenteil (2) und der Schneidenteil (2) auf die Auflage (3) aufgesintert ist.

2. Spanabhebendes Werkzeug nach Anspruch 1, **dadurch gekennzeichnet, daß** der Schneidenteil (2) in einem Schlitz des Werkzeuggrundkörpers befestigt ist.

3. Spanabhebendes Werkzeug nach Anspruch 1 oder 2, **dadurch gekennzeichnet, daß** der Übergang zwischen Schneidenteil (2) und Spanbrecherteil (1) durch einen Radius (R) gebildet wird.

4. Spanabhebendes Werkzeug nach einem der vorhergehenden Ansprüche, **dadurch gekennzeichnet, daß** der Übergang zwischen Schneidenteil (2) und Spanbrecherteil (1) durch einen Winkel δ gebildet wird.

5. Spanabhebendes Werkzeug nach einem der vorhergehenden Ansprüche, **dadurch gekennzeichnet, daß** der Übergang zwischen Schneidenteil (2) und Spanbrecherteil (1) durch einen Übergangsradius (R) mit einem daran anschließenden Winkel δ gebildet wird.

6. Spanabhebendes Werkzeug nach einem der vorhergehenden Ansprüche, **dadurch gekennzeichnet, daß** die Spanbrecherfläche aus mehreren aneinanderliegenden, konkaven Flächen (13) gebildet wird.

7. Spanabhebendes Werkzeug nach einem der vorhergehenden Ansprüche, **dadurch gekennzeichnet, daß** die Spanbrecherfläche aus mehrereren aneinanderliegenden, konvexen Flächen (14) besteht.

8. Spanabhebendes Werkzeug nach einem der vorhergehenden Ansprüche, **dadurch gekennzeichnet, daß** die Spanbrecherfläche aus treppenförmig angeordneten Einzelflächen (15, 16) besteht.

9. Spanabhebendes Werkzeug nach einem der vorhergehenden Ansprüche, **dadurch gekennzeichnet, daß** die aus Spanbrecherteil (1), Schneidenteil (2) und Unterlage (3) bestehende Verbundplatte auf den Werkzeuggrundkörper (4) aufgelötet ist.

10. Spanabhebendes Werkzeug nach einem der vorhergehenden Ansprüche, **dadurch gekennzeichnet, daß** die mit dem Spanbrecher (11) versehene Verbundplatte auf den Werkzeuggrundkörper (4) aufgeklebt ist.

11. Spanabhebendes Werkzeug nach einem der vorhergehenden Ansprüche, **dadurch gekennzeichnet, daß** die mit dem Spanbrecher (11) versehene Verbundplatte auf den Werkzeuggrundkörper (4) aufgeschraubt ist.

12. Spanabhebendes Werkzeug nach einem der vorhergehenden Ansprüche, **dadurch gekennzeichnet, daß** die mit dem Spanbrecher (11) versehene Verbundplatte auf den Werkzeuggrundkörper (4) geklemmt ist.

13. Spanabhebendes Werkzeug nach einem der vorhergehenden Ansprüche, **dadurch gekennzeichnet, daß** der Spanbrecher (11) parallel zur Schneide (21) verläuft.

14. Spanabhebendes Werkzeug nach einem der vorhergehenden Ansprüche, **dadurch gekennzeichnet, daß** der Spanbrecher (11) einen Winkel α oder β mit der Schneide (21) bildet.

15. Spanabhebendes Werkzeug nach einem der vorhergehenden Ansprüche, **dadurch gekennzeichnet, daß** der Spanbrecher (11) bogenförmig oder teilweise bogenförmig ausgeführt ist.

16. Spanabhebendes Werkzeug nach einem der vorhergehenden Ansprüche, **dadurch gekennzeichnet, daß** der Spanbrecher (11) mit wellenförmigen oder trapezförmigen Rillen ausgeführt ist.

17. Spanabhebendes Werkzeug nach einem der vorhergehenden Ansprüche, **dadurch gekennzeichnet, daß** das Spanbrecherteil (1) das Schneidenteil (2) überragt.

18. Spanabhebendes Werkzeug nach einem der vorhergehenden Ansprüche, **dadurch gekennzeichnet, daß** das Spanbrecherteil eine taschenförmige Aussparung (17) enthält.

19. Spanabhebendes Werkzeug nach einem der vorhergehenden Ansprüche, **dadurch gekennzeichnet, daß** das Spanbrecherteil Spanleitrillen (18) enthält, die durchgängig in der Spannut des Werkzeuggrundkörpers weitergeführt sind.

20. Spanabhebendes Werkzeug nach einem der vorhergehenden Ansprüche, **dadurch gekennzeichnet, daß** das Spanbrecherteil Spanleitrillen (19) enthält, die kürzer als das Spanbrecherteil (1) ausgeführt sind.

21. Spanabhebendes Werkzeug nach einem der vorhergehenden Ansprüche, **dadurch gekennzeichnet, daß** das Werkzeug mindestens 2 Stufen mit verschiedenen Durchmessern aufweist.

22. Spanabhebendes Werkzeug nach einem der vorhergehenden Ansprüche, **dadurch gekennzeichnet, daß** das Werkzeug eine eingesetzte Bohrerspitze hat.

## Claims

1. Cutting tool for drilling, reaming, countersinking, milling, sawing and turning, with at least one cutting edge and with at least one chip breaker at the cutting edge, **characterised in that** a composite plate designed as a sandwich plate consisting of a chip breaker part (1) and a cutting part (2) with support (3) is fixed to the tool body (4),
the cutting part (2) is made of a cutting material of PDK or CBN and
the chip breaker part (1) is sintered onto the cutting part (2) and the cutting part (2) onto the support (3).

2. Cutting tool according to claim 1, **characterised in that** the cutting part (2) is fixed in a slot of the tool body.

3. Cutting tool according to Claim 1 or 2, **characterised in that** the transition between the cutting part (2) and the chip breaker part (1) is formed by a radius ( R ).

4. Cutting tool according to one of the preceding claims, **characterised in that** the transition between the cutting part (2) and the chip breaker part (1) is formed by an angle δ.

5. Cutting tool according to one of the preceding claims, **characterised in that** the transition between the cutting part (2) and the chip breaker part (1) is formed by a transition radius ( R ) with an angle δ adjacent to it.

6. Cutting tool according to one of the preceding claims, **characterised in that** the chip breaker face is formed by several successive, concave faces (13).

7. Cutting tool according to one of the preceding claims, **characterised in that** the chip breaker face consists of a multiplicity of successive, convex faces (14).

8. Cutting tool according to one of the preceding claims, **characterised in that** the chip breaker face consists of individual faces (15, 16) arranged step-like.

9. Cutting tool according to one of the preceding claims, **characterised in that** the composite plate consisting of a chip breaker part (1), a cutting part (2) and a support (3) is brazed onto the tool body (4).

10. Cutting tool according to one of the preceding claims, **characterised in that** the compound plate provided with the chip breaker (11) is bonded to the tool body (4).

11. Cutting tool according to one of thee preceding claims, **characterised in that** the compound plate provided with the chip breaker (11) is bolted to the tool body (4).

12. Cutting tool according to one of the preceding claims, **characterised in that** the compound plate provided with the chip breaker (11) is clamped to the tool body (4).

13. Cutting tool according to one of the preceding claims, **characterised in that** the chip breaker (11) runs parallel to the cutting edge (21).

14. Cutting tool according to one of the preceding claims, **characterised in that** the chip breaker (11) forms with the cutting edge (21) an angle α or β.

15. Cutting tool according to one of the preceding claims, **characterised in that** the chip breaker (11) is curved or partly curved.

16. Cutting tool according to one of the preceding claims, **characterised in that** the chip breaker (11) has wave-like or trapezoidal grooves.

17. Cutting tool according to one of the preceding claims, **characterised in that** the chip breaker part (1) protrudes past the cutting part (2).

18. Cutting tool according to one of the preceding claims, **characterised in that** the chip breaker contains a pocket-like recess (17).

19. Cutting tool according to one of the preceding claims, **characterised in that** the chip breaker part has chip guide grooves (18) which continue to run through in the chip flute in the tool body.

20. Cutting tool according to one of the preceding claims, **characterised in that** the chip breaker part has chip guide flutes (19) which are shorter than the chip breaker part (1).

21. Cutting tool according to one of the preceding claims, **characterised in that** the tool has at least 2 steps with different diameters.

22. Cutting tool according to one of the preceding claims, **characterised in that** the tool has an inserted drill bit.

## Revendications

1. Outil d'usinage à percer, aléser, chambrer, fraiser, scier et tourner comportant au moins une arête de coupe et au moins un brise-copeaux sur l'arête de coupe,
**caractérisé**
**en ce que** sur le corps de base (4) de l'outil est fixée une plaquette composite de type plaquette sandwich, comprenant une partie brise-copeaux (1) et une partie arête de coupe (2) avec support (3),
**en ce que** la partie arête de coupe (2) est constituée d'un matériau de coupe à base de PKD ou de CBN et
**en ce que** la partie brise-copeaux (1) est frittée sur la partie arête de coupe (2) et la partie arête de coupe (2) est frittée sur le support (3).

2. Outil d'usinage selon la revendication 1, **caractérisé en ce que** la partie arête de coupe (2) est fixée dans une fente du corps de base d'outil.

3. Outil d'usinage selon la revendication 1 ou 2, **caractérisé en ce que** le raccordement entre la partie arête de coupe (2) et la partie brise-copeaux (1) est formée par un rayon (R).

4. Outil d'usinage selon une des revendications précédentes, **caractérisé en ce que** le raccordement entre la partie arête de coupe (2) et la partie brise-copeaux (1) est formée par un angle (δ).

5. Outil d'usinage selon une des revendications précédentes, **caractérisé en ce que** le raccordement entre la partie arête de coupe (2) et la partie brise-copeaux (1) est formée par un rayon (R) suivi d'un angle (δ).

6. Outil d'usinage selon une des revendications précédentes, **caractérisé en ce que** la surface brise-copeaux est formée de plusieurs surfaces concaves (14) disposées les unes à côté des autres.

7. Outil d'usinage selon une des revendications précédentes, **caractérisé en ce que** la surface brise-copeaux est formée de plusieurs surfaces convexes (14) disposées les unes à côté des autres.

8. Outil d'usinage selon une des revendications précédentes, **caractérisé en ce que** la surface brise-copeaux est formée de plusieurs surfaces indépendantes (15,16) disposées en escalier.

9. Outil d'usinage selon une des revendications précédentes, **caractérisé en ce que** la plaquette composite, formée de la partie brise-copeaux (1), de la partie arête de coupe (2) et du support (3), est brasée sur le corps de base d'outil (4).

10. Outil d'usinage selon une des revendications précédentes, **caractérisé en ce que** la plaquette composite munie du brise-copeaux (11) est collée sur le corps de base d'outil (4).

11. Outil d'usinage selon une des revendications précédentes, **caractérisé en ce que** la plaquette composite munie du brise-copeaux (11) est vissée sur le corps de base d'outil (4).

12. Outil d'usinage selon une des revendications précédentes, **caractérisé en ce que** la plaquette composite munie du brise-copeaux (11) est fixée par serrage sur le corps de base d'outil (4).

13. Outil d'usinage selon une des revendications précédentes, **caractérisé en ce que** le brise-copeaux (11) s'étend parallèlement à l'arête de coupe (21).

14. Outil d'usinage selon une des revendications précédentes, **caractérisé en ce que** le brise-copeaux (11) forme un angle α ou β avec l'arête de coupe (21).

15. Outil d'usinage selon une des revendications précédentes,
**caractérisé en ce que** le brise-copeaux (11) est conformé en arc ou partiellement en arc.

16. Outil d'usinage selon une des revendications précédentes, **caractérisé en ce que** le brise-copeaux (11) est pourvu de sillons en forme d'onde ou en forme de trapèze.

17. Outil d'usinage selon une des revendications précédentes, **caractérisé en ce que** le brise-copeaux (11) est plus haut que l'arête de coupe (21).

18. Outil d'usinage selon une des revendications précédentes, **caractérisé en ce que** la partie brise-copeaux comporte une échancrure (17) en forme de poche.

19. Outil d'usinage selon une des revendications précédentes, **caractérisé en ce que** la partie brise-copeaux contient des sillons guide-copeaux (18) qui se prolongent jusque dans la rainure à copeaux du corps de base d'outil.

20. Outil d'usinage selon une des revendications précédentes, **caractérisé en ce que** la partie brise-copeaux contient des sillons guide-copeaux (19) qui sont plus courts que ladite partie brise-copeaux (1).

21. Outil d'usinage selon une des revendications précédentes, **caractérisé en ce que** l'outil comporte au moins deux étages de diamètre différent.

22. Outil d'usinage selon une des revendications précédentes, **caractérisé en ce que** l'outil comporte une pointe de foret rapportée.
